# EUROPEAN PATENT APPLICATION

(11) **EP 4 686 169 A1**
(43) Date of publication of application: **28.01.2026**
(21) Application number: 23935095.2
(22) Date of filing: 04.12.2023
(51) Int. Cl.: H04L 47/34

(54) **PACKET TRANSMISSION METHOD AND DEVICE**

(30) Priority: 28.04.2023 CN 202310482950
(71) Applicant: Huawei Technologies Co., Ltd., Shenzhen, Guangdong 518129 (CN)
(72) Inventor: QIN, Mindong, Shenzhen, Guangdong 518129 (CN); QU, Xiangfeng, Shenzhen, Guangdong 518129 (CN); CHENG, Zhongwu, Shenzhen, Guangdong 518129 (CN); LI, Bing, Shenzhen, Guangdong 518129 (CN); CHENG, Chuanning, Shenzhen, Guangdong 518129 (CN)
(74) Representative: Huawei European IPR
(86) International application number: PCT/CN2023/136180
(87) International publication number: WO 2024/221928

(57) **Abstract**

This application provides a packet transmission method, applied to a first device. The first device and a second device are connected by using a queue pair (Queue Pair, QP), and the queue pair is used to perform packet transmission through a plurality of paths. The method includes: A transmit device locally stores a first mapping table and a send queue. The first mapping table stores an identifier of a packet that has been received by a receive device, and the send queue stores a to-be-sent packet. When a to-be-sent first packet is a packet that needs to be sent in order, the transmit device may determine, based on a packet identifier stored in the first mapping table, whether a previous packet of the first packet has been received by the peer end. If the previous packet of the first packet has not been received by the peer end, the transmit device buffers the first packet, and continues to send a subsequent packet that does not need to be sent in order and that is of the first packet. In this way, sending of the subsequent packet that does not need to be sent in order may not be blocked, and bandwidth of an interconnection network can be fully utilized.

## Description

This application claims priority to Chinese Patent Application No. 202310482950.1, filed with the China National Intellectual Property Administration on April 28, 2023 and entitled "PACKET TRANSMISSION METHOD AND APPARATUS", which is incorporated herein by reference in its entirety.

### TECHNICAL FIELD

Embodiments of this application relate to the communication field, and in particular, to a packet transmission method and apparatus.

### BACKGROUND

As cutting-edge technologies such as a fifth generation (fifth generation, 5G) mobile communication technology, big data, the internet of things, and artificial intelligence (artificial intelligence, AI) are redefining all walks of life, it is foreseeable that the society is stepping into a digital and intelligent world where all things can sense, all things are connected, and all things are intelligent. Computing power of a high-performance data center has become a new productivity, and strength of the data center is transforming from an original resource scale to a computing power scale. A concept of computing power center is widely accepted in the industry. As the data center evolves to the computing power center, a network is the most important part of the data center to achieve high computing power. Improving network performance can significantly improve computing power usage effectiveness of the data center.

A requirement for the network by the high-performance data center is embodied in two key indicators: high throughput and low latency. To implement the high throughput and the low latency, a remote direct memory access (Remote Direct Memory Access, RDMA) technology is usually used in the industry to replace a conventional transmission control protocol (Transmission Control Protocol, TCP) technology, so as to reduce a latency and reduce central processing unit (Central Processing Unit, CPU) usage of the data center.

Currently, as mainstream RDMA technologies in the industry, an InfiniBand (InfiniBand, IB) technology RDMA protocol and an RDMA technology based on Ethernet physical layer transmission (RDMA over Converged Ethernet, RoCE) are widely used in the high-performance data center interconnect field. IB and RoCE are network protocols designed for RDMA, and ensure a lossless network at a hardware level and have ultra-high bandwidth and an ultra-low latency. However, the IB and RoCE protocols support only fence (Fence) ordering and strong ordering (Strong Ordering) in terms of an interconnect packet ordering manner. Fence ordering requires that a fence ordering packet can be sent only after it is confirmed that a previous packet has been completely received, which increases a network latency. Strong ordering requires single-path transmission in an interconnection network, and consequently network bandwidth cannot be fully utilized.

An existing packet ordering manner in the RDMA technology limits ultimate performance of a data center in a scenario with an extremely low latency requirement and extremely high network bandwidth. Therefore, how to provide a new packet ordering manner to fully utilize multi-path transmission of the interconnection network and maximize network transmission performance is an urgent problem to be resolved.

### SUMMARY

Embodiments of this application provide a packet transmission method, to implement packet ordering while fully utilizing multi-path transmission of an interconnection network and maximizing network transmission performance.

According to a first aspect, a packet transmission method is provided, and is applied to a first device. The method may be performed by the first device, or may be performed by a circuit configured in the first device. This is not limited in this application. For convenience, the following uses an example in which the first device performs the method for description. A queue pair (queue pair, QP) connection is established between the first device and a second device, and the QP connection is used to send and receive a packet. Specifically, the QP connection is used to perform packet transmission by using at least one transport group (Transport Group, TPG).

For example, the first device serves as a packet transmitter, and the second device serves as a packet receiver. Alternatively, the first device serves as a packet receiver, and the second device serves as a packet transmitter. For ease of description, the following uses an example in which the first device is a packet transmitter and the second device is a packet receiver for description.

The first device stores a first mapping table and a send queue. The first mapping table includes an identifier of a packet that has been received by the second device, and the send queue includes a to-be-sent packet. The packet transmission method includes: The first device obtains a first packet from the send queue, where the first packet is an ordering packet; and when an identifier of at least one previous packet of the first packet is not in the first mapping table, the first device obtains a non-ordering packet after the first packet, and sends the non-ordering packet.

Based on the foregoing technical solution, when the to-be-sent first packet is a packet that needs to be sent in order, the transmit device may determine, based on a packet identifier stored in the first mapping table, whether a previous packet of the first packet has been received by the peer end. If the previous packet of the first packet has not been received by the peer end, the transmit device continues to send a subsequent packet that does not need to be sent in order and that is of the first packet. In this way, sending of the subsequent packet that does not need to be sent in order is not blocked, and bandwidth of an interconnection network can be fully utilized.

With reference to the first aspect, in some implementations of the first aspect, when all identifiers of previous packets of the first packet are in the first mapping table, the first device sends the first packet.

With reference to the first aspect, in some implementations of the first aspect, the first packet is a transaction layer packet, and the first packet includes a transaction header TA header; and the TA header includes a first sequence number SN, first indication information, and second indication information, where the first indication information indicates a TPG corresponding to the first packet, and the second indication information indicates an ordering requirement of the first packet.

Based on the foregoing technical solution, the first packet may be a transaction layer packet, and ordered sending of the transaction layer packet is implemented on a premise that the bandwidth of the interconnection network is fully utilized. Specifically, the transaction layer packet includes the transaction header TA header, and the TA header includes the first SN used to identify a packet sequence, so that a transport layer of the first device can determine a sequence of the first packet in a plurality of packets based on the first SN. The TA header further includes the TPG corresponding to the first packet, so that the transport layer of the first device determines to transmit the first packet in the TPG corresponding to the first packet. The TA header further includes the second indication information indicating the ordering requirement of the first packet, so that the transport layer of the first device determines whether the first packet is a packet that needs to be sent in order.

With reference to the first aspect, in some implementations of the first aspect, that the first device sends the first packet includes: A transaction layer of the first device sends the first packet to the transport layer of the first device; and the transport layer of the first device sends the first packet to a transport layer of the second device.

With reference to the first aspect, in some implementations of the first aspect, the first packet is a transport layer packet, and the first packet includes a transaction header TA header and a transport header TP Header; and the TA header includes a first sequence number SN, first indication information, and second indication information, where the first indication information indicates a TPG corresponding to the first packet, the second indication information indicates an ordering requirement of the first packet, and the TP header includes a second SN of the first packet.

Based on the foregoing technical solution, a specific transmission procedure of the first packet may be as follows: A transaction layer of the first device transmits the first packet to a transport layer of the first device, and then the transport layer of the first device transmits the first packet to a transport layer of the second device. In other words, a connection is established between the transport layers of the two devices, and the transaction layer may be unaware of the connection establishment.

With reference to the first aspect, in some implementations of the first aspect, after the first device sends the first packet, the method further includes: The first device stores the first SN in the first mapping table.

Based on the foregoing technical solution, after successfully sending a packet, the first device may store an SN of the packet in the first mapping table, to determine whether a subsequent to-be-sent packet can be directly sent.

With reference to the first aspect, in some implementations of the first aspect, when an identifier of at least one previous packet of the first packet is not in the first mapping table, the method further includes: The first device buffers the first packet in a buffer of the first device.

Based on the foregoing technical solution, if not all the previous packets of the first packet are received by the second device, the first device may buffer the first packet in the buffer, and directly obtain the first packet from the buffer and send the first packet when a sending condition is subsequently met.

With reference to the first aspect, in some implementations of the first aspect, the method further includes: The first device receives acknowledgment information from the second device, where the acknowledgment information indicates that a second packet has been received by the second device; the first device stores an identifier of the second packet in the first mapping table, and updates the first mapping table; and the first device determines, based on an updated first mapping table, whether to send the first packet.

Based on the foregoing technical solution, after receiving the acknowledgment information of the second device, the first device may determine, based on the acknowledgment information, that the second packet is received by the second device. In this way, the first device may store the identifier of the second packet in the first mapping table, update the first mapping table, and re-determine whether the first packet can be sent based on the updated first mapping table. The first device determines, in a timely manner based on a feedback of the second device, whether a packet can be sent, to ensure timeliness of packet transmission.

With reference to the first aspect, in some implementations of the first aspect, that the first device obtains the non-ordering packet after the first packet and sends the non-ordering packet includes: The first device obtains, from the send queue, a third packet after the first packet; the first device determines, based on an ordering requirement carried in a transaction header TA header of the third packet, that the third packet is a non-ordering packet; and the first device sends the third packet.

With reference to the first aspect, in some implementations of the first aspect, a context of the send queue includes the following information: a first index, a first validation flag, and a first queue index, where the first index indicates the first mapping table, the first validation flag indicates whether there is a to-be-sent ordering packet in the send queue, the first queue index indicates a first queue, and the first queue is used to buffer an unsent ordering packet.

According to a second aspect, a packet transmission method is provided, and is applied to a second device. The method may be performed by the second device, or may be performed by a circuit configured in the second device. This is not limited in this application. For convenience, the following uses an example in which the second device performs the method for description. A queue pair (queue pair, QP) connection is established between the second device and a first device, and the QP connection is used to send and receive a packet. Specifically, the QP connection is used to perform packet transmission by using at least one transport group (Transport Group, TPG).

For example, the first device serves as a packet transmitter, and the second device serves as a packet receiver. Alternatively, the first device serves as a packet receiver, and the second device serves as a packet transmitter. For ease of description, the following uses an example in which the first device is a packet transmitter and the second device is a packet receiver for description.

The second device stores a second mapping table, and the second mapping table includes an identifier of a packet that has been received by the second device. The packet transmission method includes: The second device receives a first packet from the first device; the second device stores an identifier of the first packet in the second mapping table, and updates the second mapping table, where the first packet is an ordering packet; when an identifier of at least one previous packet of the first packet is in the second mapping table, the second device processes the first packet and the previous packet of the first packet; or when an identifier of at least one packet before a second packet is not in the second mapping table, the second device buffers the first packet, receives a non-ordering packet after the first packet, and processes the non-ordering packet.

Based on the foregoing technical solution, after the receive device receives the first packet with an ordering requirement, if not all the previous packets of the first packet are received, the receive device buffers the first packet, and continues to receive a subsequent non-ordering packet. In this way, processing of a subsequent packet that does not need to be sent in order is not blocked, and bandwidth of an interconnection network can be fully utilized.

For related descriptions of the first packet, refer to the descriptions of the first packet in the first aspect. Details are not described herein again.

With reference to the second aspect, in some implementations of the second aspect, after the second device buffers the first packet, the method further includes: The second device receives and processes a second packet; the second device stores an identifier of the second packet in the second mapping table, and updates the second mapping table, where the second packet is not an ordering packet; and the second device determines, based on an updated second mapping table, whether to process the first packet.

Based on the foregoing technical solution, after receiving another packet, the second device may store an identifier of the received packet in the second mapping table, update the second mapping table, and re-determine, based on an updated second mapping table, whether the first packet can be processed. The second device determines, in a timely manner based on a packet receiving status, whether the packet can be processed, to ensure timeliness of packet processing.

With reference to the second aspect, in some implementations of the second aspect, the second device stores a receive queue, and a context of the receive queue includes the following information: a second index, a second validation flag, and a second queue index, where the second index indicates the second mapping table, the second validation flag indicates whether there is a received ordering packet in the receive queue, the second queue index indicates a second queue, and the second queue is used to buffer an unprocessed ordering packet.

According to a third aspect, a packet transmission apparatus is provided. The apparatus includes: a storage module, configured to store a program; and a processing module, configured to execute the program stored in the storage module. When the program stored in the storage module is executed, the processing module is configured to perform the methods provided in the foregoing aspects.

According to a fourth aspect, a computer-readable storage medium is provided. The computer-readable medium stores program code executed by a device, and the program code includes instructions used to perform the methods provided in the foregoing aspects.

According to a fifth aspect, a computer program product including instructions is provided. When the computer program product runs on a computer, the computer is caused to perform the methods provided in the foregoing aspects.

According to a sixth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions. The processing module is configured to execute the instructions stored in the storage module. When the instructions are executed, the processing module is configured to perform the methods provided in the foregoing aspects.

According to a seventh aspect, a chip is provided. The chip includes a first device configured to perform the method provided in the first aspect and a second device configured to perform the method provided in the second aspect.

According to an eighth aspect, a computer device is provided. The computer device includes the chip shown in the seventh aspect. For example, the computer device includes but is not limited to a switch or a server in a data center.

According to a ninth aspect, a terminal device is provided. The terminal device includes the chip shown in the seventh aspect. For example, the terminal device includes but is not limited to a terminal like a mobile phone or a vehicle.

According to a tenth aspect, a packet transmission system is provided. The system includes a first device configured to perform the method provided in the first aspect and a second device configured to receive a packet.

### BRIEF DESCRIPTION OF DRAWINGS

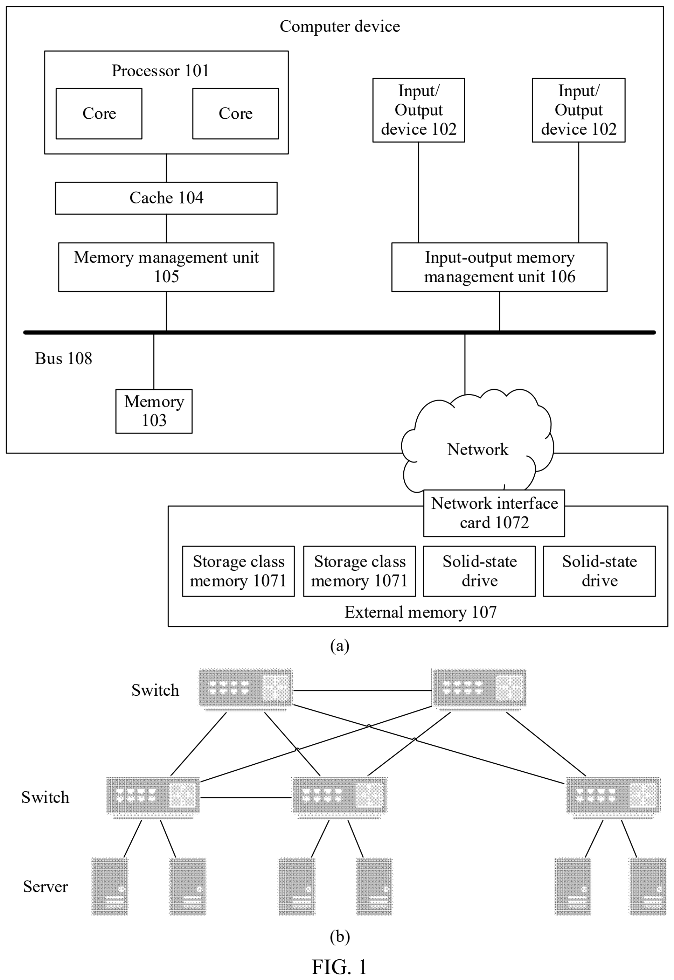

(a) in FIG. 1 is a diagram of a structure of a computer device according to an embodiment of this application;
(b) in FIG. 1 is a diagram of a data center according to an embodiment of this application;
FIG. 2 is a diagram of a universal bus protocol packet format according to an embodiment of this application;
FIG. 3(a) is a diagram of a structure of an application scenario according to an embodiment of this application;
FIG. 3(b) is a diagram of reception by a chip according to this application;
(a) and (b) in FIG. 4 are diagrams of ordering manners;
FIG. 5 is a schematic flowchart of packet transmission according to an embodiment of this application;
FIG. 6 is another schematic flowchart of packet transmission according to an embodiment of this application;
FIG. 7 is a diagram of a data structure constructed by a transmitter according to an embodiment of this application;
FIG. 8 is still another schematic flowchart of packet transmission according to an embodiment of this application;
FIG. 9 is a diagram of a data structure constructed by a receiver according to an embodiment of this application;
FIG. 10 is a diagram of a structure of a packet transmission apparatus 1000 according to an embodiment of this application;
FIG. 11 is a diagram of a structure of a chip system 1100 according to an embodiment of this application; and
FIG. 12 schematically shows a conceptual partial view of a computer program product according to an embodiment of this application.

### DESCRIPTION OF EMBODIMENTS

The following describes technical solutions in embodiments of this application with reference to accompanying drawings.

In many applications, a computer device on which an application is deployed needs to access data, to implement a function of the application. For example, a computer device on which a database application is deployed needs to access a large amount of data to update data in a database, or return a query result to a user in response to a data query request. For another example, a computer device on which a web (web) application is deployed needs to access a large amount of data, to return requested content to a user.

The computer device may be a server, a switch, or a terminal. The terminal includes but is not limited to user equipments such as a desktop computer, a notebook computer, and a smartphone. For ease of understanding, the following describes a structure of the computer device.

Refer to a diagram of a structure of a computer device shown in (a) in FIG. 1. The computer device includes a processor 101, an input/output device (input/output device, I/O device) 102, a memory 103, a cache 104, a memory management unit (memory management unit, MMU) 105, an input-output memory management unit (input-output memory management unit, IOMMU) 106, an external memory 107, and a bus 108.

The processor 101 includes at least one core (core). The core is also referred to as a computing engine. Each core may independently execute a task. When the processor 101 includes a plurality of cores, tasks from an application may be classified, so that the application can make full use of the plurality of cores to execute more tasks within specific time. In this embodiment, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus, or a microphone, and the output device may include a device like a display or a speaker.

The memory 103 is also referred to as an internal memory or a main memory, and is configured to temporarily store operation data in the processor 101. Further, the memory 103 is further configured to temporarily store data exchanged with the external memory 107. The memory 103 may be generally implemented by using a storage medium like a dynamic random access memory DRAM or a static random access memory (static random access memory, SRAM).

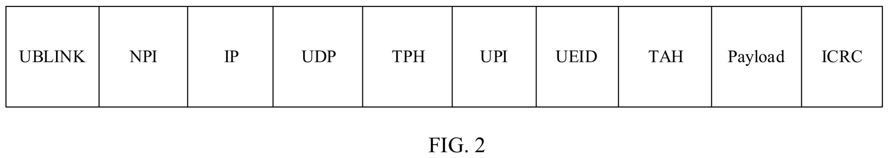

The cache 104 (in this embodiment, the cache is a processor cache, for example, a CPU cache) is a component configured to reduce average time required for the processor 101 to access the memory 103. Refer to FIG. 2. In a pyramid storage system, the cache 104 is located at a second layer from top to bottom, is only lower than a register (not shown in (a) in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input-output memory management unit 106 is essentially a memory management unit. Similar to that the memory management unit 105 maps a virtual address visible to the processor 101 to a physical address, the input-output memory management unit 106 is configured to map a virtual address (which may also be referred to as a device address or an I/O address) visible to the input/output device 102 to a physical address.

The external memory 107 is also referred to as an external storage or a secondary memory, and is usually configured to persistently store data. For example, the external memory 107 may persistently store the operation data in the processor 101. Even if power supply is abnormal, data that has been written into the external memory 107 can still be stored. This avoids a data loss. During specific implementation, the external memory 107 includes at least one non-volatile memory 1071. When the external memory includes a plurality of non-volatile memories, the plurality of non-volatile memories may be of a same type, or may be of different types. For example, in an example of (a) in FIG. 1, the external memory 107 may include two types of non-volatile memories, for example, a storage class memory (storage class memory, SCM) and a solid-state drive (solid-state drive, SSD).

The bus 108 is configured to connect functional components of the computer device. The bus 108 is a public communication backbone for transmitting information between the functional components of the computer device. The bus 108 may be a transmission wire bundle formed by wires. The bus 108 may be further classified into an internal bus and an external bus based on different connection objects.

The internal bus uses an internal bus protocol to transmit information. The internal bus protocol includes a bus protocol used to access memory space of the computer device. The external bus uses an external bus protocol to transmit information. The external bus protocol includes a bus protocol used to access external memory space of the computer device. The memory space is address space of the memory, and the external memory space is address space of the external memory.

In some embodiments, the internal bus protocol includes but is not limited to a peripheral component interconnect (peripheral component interconnect, PCI) bus, a peripheral component interconnect express (PCI Express, PCIe) protocol, a quickpath interconnect (Intel^{®} QuickPath Interconnect, QPI) protocol, and a universal bus (Unified Bus, UB) protocol. The external bus protocol includes but is not limited to a small computer system interface (small computer system interface, SCSI) protocol or a serial attached small computer system interface (Serial Attached SCSI, SAS) protocol.

It should be noted that the computer device shown in (a) in FIG. 1 is described by using an example in which the external memory 107 is a remote external memory. As shown in FIG. 1, the external memory 107 includes a network interface card 1072. The network interface card 1072 may be, for example, a smart network interface card NIC (that is, a network adapter card). The external memory 107 accesses a network via the network interface card 1072, and is further connected to another component of the computer device over the network. The network may be a wired communication network, for example, an optical fiber communication network, or may be a wireless communication network, for example, a wireless local area network (wireless local area network, WLAN) or a fifth generation (fifth generation, 5G) mobile communication network.

In some possible implementations, the external memory 107 of the computer device may alternatively be a local external memory, and another component of the computer device, for example, the processor 101, may be connected to the local external memory through the bus 108. In some other possible implementations, the computer device may include both a remote external memory and a local external memory. In addition, this embodiment of this application is applicable to a centralized storage scenario or a distributed storage scenario. This is not limited in this embodiment.

This application mainly relates to cross-network packet transmission. For example, this application is applied to a server cluster that needs to communicate across networks, for example, a data center shown in (b) in FIG. 1. An internal structure of a switch or a server shown in (b) in FIG. 1 is shown in (a) in FIG. 1 above. A computer device in the following includes but is not limited to the switch or the server in the data center.

In addition, a packet transmission device in this application may be a device that supports a universal bus (Unified Bus, UB) protocol (or may further support another bus protocol, which is not limited in this application). The universal bus protocol may also be referred to as a Lingqu bus or a unified bus, and is a bus protocol standard. A name of the universal bus is not limited in this application.

The universal bus protocol breaks existing protocol barriers and eliminates unnecessary conversion overheads, thereby achieving an ultra-low latency. The universal bus protocol defines an independent transaction layer and transport layer. There is a connection between transport layers, but no connection between transaction layers. All transactions in a host are transmitted on one transport layer. The universal bus protocol includes the transport layer and the transaction layer. The transport layer is responsible for retransmission of a lost packet in a network to ensure reliable transmission, and the transaction layer processes different transactions. The transport layer receives a packet from the network, strips a transport header, and forwards the packet to the transaction layer.

FIG. 2 shows a universal bus protocol packet format. Specifically, field definitions in the universal bus protocol packet format are shown in Table 1:

**Table 1**

| Name (name) | Description (description) |
|---|---|
| UB link (UBLINK) layer | Link (LINK) layer defined in the UB protocol, where the UBLINK may also be replaced with Ethernet MAC, and this form is defined as UB over Ethernet in the UB protocol |
| Network partition ID (Network Partition ID, NPI) | Used for physical network isolation |
| IP | IP protocol header |
| User datagram protocol (User Datagram Protocol, UDP) | UDP protocol header, where a UDP destination port number equal to 4792 indicates a UB packet, and the UDP is followed by a transport header (Transport Header, TPH) |
| TPH | Transport header, including content such as a TP opcode, a source TPN, a destination TPN, and a packet sequence number (Packet Sequence Number) |
| UB partition ID (UB partition ID, UPI) | Used for tenant isolation |
| UB entity ID (UB Entity ID, UEID) | Including a source entity identifier (Source Entity ID) and a destination entity identifier (Destination Entity ID), where |
| | a bit width of the entity ID is 128 bits and is unique in the entire network, and an entity identifier (EID) may represent a virtual machine, or may represent an SSD controller |
| Transaction header (Transaction Header, TAH) | Transaction header, including a TA opcode (indicating a transaction operation type like send, read, write, atomic, or transaction layer acknowledgment), a destination JFR number, a transaction layer segment sequence number (Segment Sequence Number, TASSN), a read/write address, a length, and the like |

Specifically, an interaction interface between the transaction layer of the universal bus protocol and an application is referred to as a Jetty. A message of the application may be sent to any destination through one Jetty, or a message from any source may be received through one Jetty. A Jetty that can be used for sending only is defined as a (Jetty For Send, JFS), and a Jetty that can be used for reception only is defined as a (Jetty For Receive, JFR).

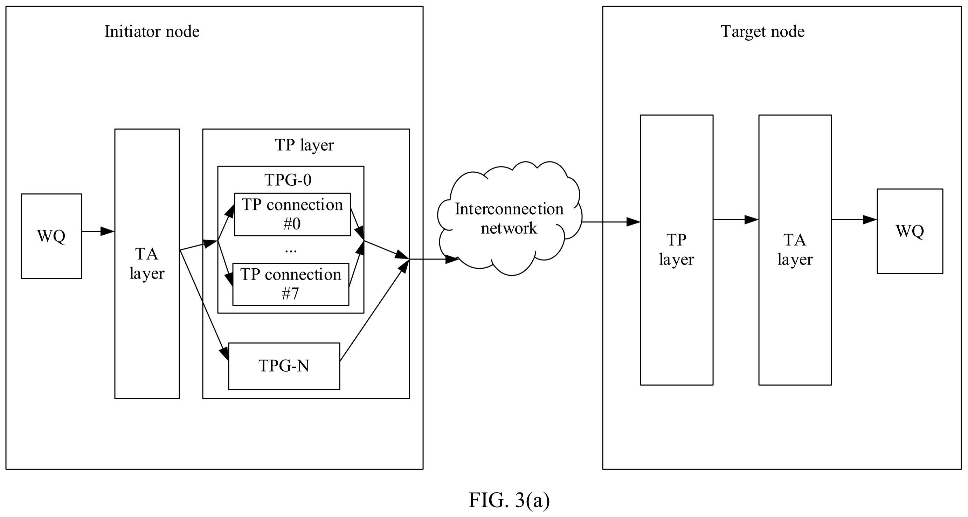

This application is mainly applied to cluster computing fields such as a data center and high-performance computing (High-Performance Computing, HPC), to increase a scale of an interconnection system, reduce an internal latency, and increase a transmission bandwidth. A framework of an application system in this application is shown in FIG. 3(a). Two nodes (for example, an initiator (Initiator) node and a target (Target) node that are shown in FIG. 3(a)) transmit data in the system over an interconnection network (Interconnection Network) of the system. In the initiator node, on a transmit side, packet processing is performed at a transaction layer (Transaction Layer, TA Layer) and a transport layer (Transport Layer, TP Layer). The TA layer implements message-level software and hardware interaction, and the TP layer implements reliable transmission of TA message data.

A plurality of transport groups (Transport Group, TPG) are established between transport TP layers of the initiator and target nodes. Each TPG includes a plurality of (Transport Port, TP) connections. Load balancing is performed for packets among the plurality of TP connections in the TPG. Packets on different TP connections may be transmitted through different network paths. Congestion control is implemented at a granularity of TP connection. When a packet loss occurs, retransmission is performed to ensure reliable transmission. For example, an internal structure of the node in FIG. 3(a) may be shown in (a) in FIG. 1. In other words, the node in FIG. 3(a) may be the computer device.

Specifically, a work queue (Working Queue, WQ) in the initiator node is a packet send or receive queue created by a communication software process. For ease of understanding, the following describes an interaction process between a process send queue of the initiator node and a process receive queue of the target node with reference to a specific procedure.
(1) A process of the initiator node writes a plurality of sending tasks into a WQ, and generates a plurality of work queue elements (Working Queue Element, WQE).
(2) The TA layer of the initiator node invokes the WQE from the WQ, and sends the WQE to a corresponding TPG. Different WQEs in one WQ may be transmitted by using different TPGs.
(3) WQE transmission may implement load balancing for transmission on a plurality of TP connections in the TPG.
(4) The target node implements packet assembly in the TPG at a TP layer, completes message assembly at a TA, applies for a WQE in a receive work queue to complete message storage, and reports a completion queue element (Completion Queue Element, CQE) to a software process, to notify the process that processing of interactive message receiving is completed.

It should be understood that, in FIG. 3(a), that a packet receiving party and a packet sending party are referred to as the initiator node and the target node is merely an example, and does not constitute any limitation on the protection scope of this application. The packet receiving party and the packet sending party may also be referred to as a "first node" and a "second node, a "first device" and a "second device", or other common names.

For example, product forms in this application are servers or network switch chips in cluster systems such as the data center and the high-performance computing. This application pertains to an ordering function of an input/output (input/output, I/O) of a related chip or an interconnection chip subsystem, and flexible ordering for packet transmission of a system interconnection chip is implemented by using hardware logic or hardware logic cooperating with software.

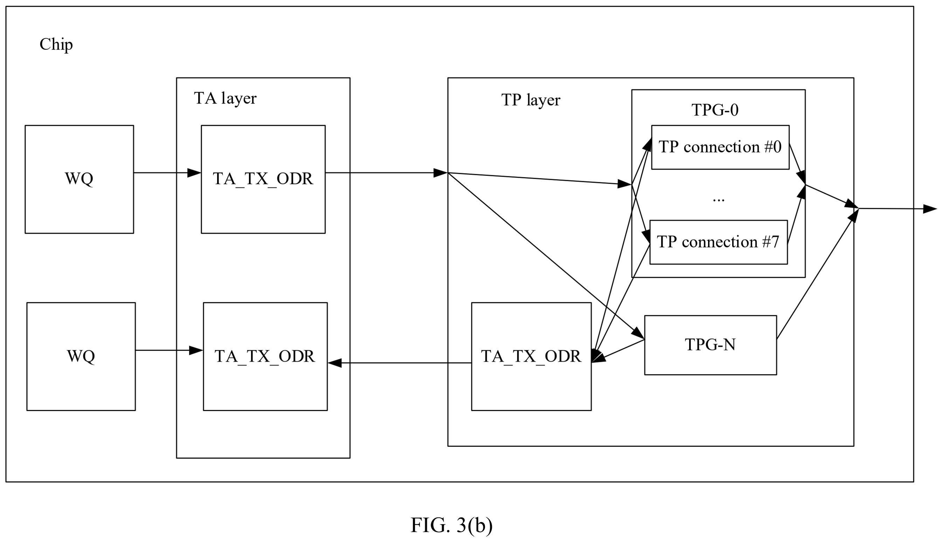

A chip structure is shown in FIG. 3(b). FIG. 3(b) is a diagram of reception by a chip according to this application. A chip includes three parts: a WQ, a TA layer, and a TP layer.

The WQ is a format of information exchanged between a software process and hardware logic. On a transmit device side, the WQ is generated by software, and hardware obtains and parses the WQ, and performs corresponding data transmission. On a receive device side, hardware obtains the WQ, parses the WQ, stores received data in a memory, and writes into a completion queue to notify software of the completion. The software obtains the completion and performs subsequent processing.

The TA layer is located between a transaction software interface and the transport layer. A transaction layer on the transmit device side converts a command delivered by the software (by using the WQ) into a transport layer transaction and sends the transport layer transaction to a transport layer. A transaction layer on the receive device side receives the transport layer transaction, converts the transaction into a memory operation (by using the WQ), and notifies an application of the completion as required. In a transaction layer protocol, features like an interaction interface between the transaction layer and the transport layer, execution procedures of various transactions, how the transaction layer processes a transaction order, and large transaction splitting are defined.

The TP layer provides end-to-end transmission services, supports single-path and multi-path transmission, and supports end-to-end congestion control and packet order maintenance. In addition, the transmission services provided by the transport layer are classified as reliable and unreliable. The reliable service ensures that data is completely sent to a peer end. When a packet loss occurs in a network, the transport layer is responsible for retransmission. The unreliable service does not ensure data integrity.

The following describes each module in detail.

The WQ may be a send queue, a receive queue, or a completion queue. The send queue and the receive queue are generated by the software, and are read and parsed by the hardware. The completion queue is generated by the hardware, and is read and parsed by the software. Each queue includes a plurality of processing elements. The send queue and the receive queue correspond to WQEs, and the completion queue corresponds to CQEs. The software and the hardware interact with each other by using the WQE and CQE. The WQ is managed by using a WQ context (WQC), and the WQ context includes information such as a WQE index and an ordering bitmap (bitmap) index. The following provides detailed descriptions with reference to a specific embodiment. Details are not described herein.

The TA layer is used to obtain content of a WQC of a corresponding queue based on a queue number, to read corresponding WQE information. Ordering at the TA layer includes transmitter ordering TA_TX_ODR and receiver ordering TA_RX_ODR functions.

In a scenario of ordering at a transmit device, an ordering bitmap of the transmit device is maintained based on a received response packet, and a sent WQE is numbered. An SN number increases each time a WQE is sent, and a large transaction WQE is split to obtain TP WQEs numbered by using TPMSNs. The TP WQEs are transmitted to a TP. The following provides detailed descriptions with reference to a specific embodiment. Details are not described herein.

In a scenario of ordering at a receive device, ordering maintenance is performed on a receiver based on a received packet and a corresponding ordering flag.

The TP layer is used to receive the TP WQEs obtained through splitting at the TA layer. For each TP WEQ that is processed, all the TP WQEs at the TP are sent to different TPGs for transmission, and sent to a TP after balancing processing is performed in the TPG. For a TP, data corresponding to the TP WQE is split into packets for transmission. In the scenario of ordering at the receive device, ordering at a TP layer is implemented by using a sequence number of a corresponding flag in the received packet and the ordering flag of the received packet. Ordering at the TP layer supports only a receive device ordering TP_RX_ODR function.

It can be learned from the foregoing interaction procedure between the process send queue of the initiator node and the process receive queue of the target node that multi-path transmission in the TPG fully utilizes bandwidth, but introduces a packet ordering problem. A requirement for a network by a high-performance data center is embodied in two key indicators: high throughput and low latency. To implement the high throughput and the low latency, an RDMA technology is usually used in the industry to replace a conventional TCP technology, so as to reduce a latency and reduce CPU usage of a data center. Currently, as mainstream RDMA technologies in the industry, IB and RoCE are widely used in the high-performance data center interconnect field. IB and RoCE are network protocols designed for RDMA, and ensure a lossless network at a hardware level and have ultra-high bandwidth and an ultra-low latency. However, the IB and RoCE protocols support only fence (Fence) ordering and strong ordering (Strong Ordering) in terms of an interconnect packet ordering manner. Fence ordering requires that a fence ordering packet can be sent only after it is confirmed that a previous packet has been completely received, which increases a network latency. Strong ordering requires single-path transmission in an interconnection network, and consequently network bandwidth cannot be fully utilized.

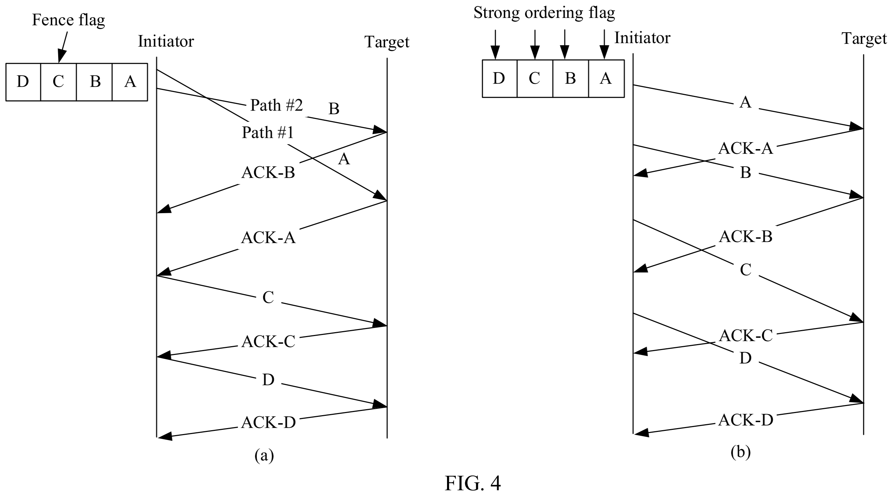

With reference to FIG. 2, the foregoing briefly describes the scenario to which this application can be applied. To facilitate understanding of embodiments of this application, some basic concepts in this application are briefly described.
1. RDMA: Data is directly transferred to a storage area of a computer over a network. The data is quickly moved from a system to a remote system memory without intervention of operating systems or kernels of two computer devices. Overheads of external memory replication and context switching are eliminated in RDMA, to free up memory bandwidth and a CPU cycle to improve application system performance. Currently, InfiniBand and RoCE are main manners for deploying RDMA on a large scale. The former is mainly used in the high-performance field, and the latter is mainly used in data centers of internet companies.
   RDMA is a transport layer network protocol that uses a queue pair (queue pair, QP) to implement sending and receiving of data (as a message) of a consumer (consumer) in a channel adapter (channel adapter, CA). Each QP includes one send queue (send queue, SQ) and one receive queue (receive queue, RQ), where the SQ is responsible for sending a message and the RQ is responsible for receiving a message. Each of the SQ and the RQ of each QP may be associated with one completion queue (completion queue, CQ). Each QP has its own connection context (connection context) for maintaining a connection status of the QP. The SQ, the RQ, and the CQ also have their own queue contexts (queue context) for maintaining queue usage statuses of the SQ, the RQ, and the CQ. The consumer is an entity that uses the QP to send/receive the message, and is generally a software process, for example, NoF protocol software.
2. Segment sequence number (Segment Sequence Number, SSN): A packet at a transaction layer may be large, for example, 16 MB. A plurality of transaction layers share one transport layer. To prevent a packet at a transaction layer from occupying a transport connection for a long time, when sending the packet to the transport layer, the transaction layer may divide the packet into a plurality of segments, for example, a segment of 64 KB, one transaction layer sends only one segment to the transport layer each time, and each segment includes a corresponding SSN.
   For example, a transmit device performs two-level splitting on a sent packet. A TP layer receives TP WQEs obtained through splitting at a TA layer. A transport layer message sequence number (transport layer message sequence number, TPMSN) increases each time a TP WEQ is processed. Inside the TP layer, all the TP WQEs are sent to TP connections of different TPGs. For a TP, data corresponding to the TP WQE is split into packets for transmission, and each packet carries a packet sequence number (packet sequence number, PSN). A PSN increases each time the TP layer sends a packet.
3. Transaction acknowledgment (Transaction ACK, TAACK): After a receiver receives a complete segment (the segment is split into a plurality of packets at a transport layer) and correctly executes the segment (for example, the segment is correctly read and written into a memory), the receiver returns a TAACK to notify a transaction layer of a transmitter that the segment has been correctly executed. Alternatively, after successfully receiving a message from a transmitter, the receiver returns a TAACK to notify a transaction layer of the transmitter that the message has been successfully received.
4. Transaction negative acknowledgment (Transaction No OK ACK, TANAK): When a receiver receives a segment and an execution error occurs (for example, a page fault occurs when the segment is read or written into a memory), the receiver returns a TANAK to notify a transaction layer of a transmitter to retransmit the segment. Alternatively, if a receiver fails to receive a message from a transmitter, the receiver returns a TANAK to notify a transaction layer of the transmitter to retransmit the message.
5. Fence (Fence) ordering: Fence ordering is transmitter ordering, and multi-path transmission may be supported. For a packet (for example, a packet C shown in (a) in FIG. 4) carrying a fence flag, it is required that packets (for example, a packet A and a packet B that are shown in (a) in FIG. 4) before the packet carrying the fence flag need to be completely received by a target, in other words, a transmitter sends the packet after receiving acknowledgments (ACK).
   It can be learned from (a) in FIG. 4 that packets to be sent by the transmitter include packets A, B, C, and D, where the packet C is a packet carrying the fence flag (fence flag). The transmitter may separately send the packets to the target through a plurality of paths. As shown in (a) in FIG. 4, the packet A and the packet B are simultaneously sent through a path #1 and a path #2. Because the packet C carries the fence flag, the packet C can be sent only after the packet A and the packet B are completely received by the target. If the transmitter receives ACKs (for example, an ACK-A and an ACK-B that are shown in (a) in FIG. 4) respectively corresponding to the packet A and the packet B, the transmitter determines that the packet A and the packet B are completely received by the target and the packet C may be sent. The packet D is sent after an ACK corresponding to the packet C is received (for example, as shown in (a) in FIG. 4).
6. Strong ordering (Strong Ordering): Strong ordering is receiver ordering. A packet is sent without waiting for complete reception by a target. However, communication parties, namely, a receiver and the target, require that only one transmission path needs to be established in an interconnection network.
   It can be seen from (b) in FIG. 4 that packets to be sent by the transmitter include packets A, B, C, and D, where the packets A, B, C, and D each carry a strong ordering flag (Strong Ordering flag). The transmit device sequentially transmits the packets A, B, C, and D through one transmission path, to ensure that the receive device receives the packets in order.
7. Ordering packet: It can be learned from the foregoing that fence (Fence) ordering and strong ordering (Strong Ordering) are for a packet with an ordering requirement. In this application, the packet with the ordering requirement is referred to as an ordering packet, and a packet without an ordering requirement is referred to as a non-ordering packet. For example, the packet with the ordering requirement includes but is not limited to a packet sent depending on a receiving status of another packet. For example, a packet #1 can be sent only when a packet #2 is successfully received. In this case, the packet #1 is an ordering packet. Similarly, the packet without the ordering requirement includes but is not limited to a packet that is not sent based on a receiving status of another packet.

In addition, for ease of understanding embodiments of this application, the following several descriptions are provided.

First, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not constitute any limitation on implementation processes of embodiments of this application. It should be understood that objects described in such a manner are interchangeable in proper cases, to describe solutions other than embodiments of this application. In addition, in embodiments of this application, words such as "S510" are merely identifiers for ease of description, and do not limit a sequence of performing steps.

Second, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Third, "store" in embodiments of this application may mean "stored in one or more memories". The one or more memories may be separately disposed, or may be integrated in an encoder, a decoder, a processor, or a communication apparatus. Alternatively, some of the one or more memories may be separately disposed, and some of the one or more memories may be integrated in a decoder, a processor, or a communication apparatus. A type of the memory may be a storage medium in any form. This is not limited in this application.

Fourth, in embodiments of this application, a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, "if" in embodiments of this application may be explained as "when" ("when" or "upon"), "in response to determining", or "in response to detecting". Similarly, based on the context, a phrase "if determining" or "if detecting (a stated condition or event)" may be interpreted as a meaning of "when determining", "in response to determining", "when detecting (the stated condition or event)", or "in response to detecting (the stated condition or event)".

Sixth, in embodiments of this application, the terms used in the descriptions of the various examples are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

With reference to FIG. 2, the foregoing briefly describes the scenario to which a packet transmission method provided in this application is applicable, and describes the basic concepts in this application. In addition, fence ordering and strong ordering are introduced in the basic concepts. Specifically, fence ordering and strong ordering have the following problems:
(1) In the fence ordering manner, a fence ordering packet can be sent only after all packets before the fence ordering packet are sent and ACKs are received. A subsequent packet can be sent only after the fence ordering packet is sent and the ACKs are received. This may block advance sending of a subsequent packet without an ordering requirement, waste bandwidth of a system interconnection network, and increase an overall transmission latency.
(2) In the strong ordering manner, only single-path transmission is supported, and bandwidth of a system interconnection network cannot be fully utilized.

To resolve the problems existing in the current ordering manners, this application provides a packet transmission method, to implement non-blocking and multi-path transmission, reduce an overall transmission latency of an interconnection network, and improve bandwidth utilization.

It should be understood that the packet transmission method provided in embodiments of this application may be applied to a computer system, for example, the data center shown in FIG. 2.

It should be further understood that a specific structure of an execution body of the method provided in embodiments of this application is not particularly limited in the following embodiments, provided that a program that records code of the method provided in embodiments of this application can be run to implement the method provided in embodiments of this application. For example, the execution body of the method provided in embodiments of this application may be a device, or may be a functional module that is in the device and that can invoke a program and execute the program.

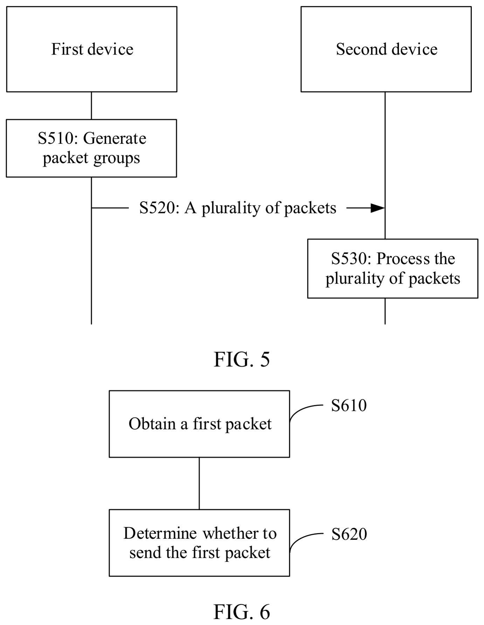

FIG. 5 is a schematic flowchart of a packet transmission method according to this application. The following steps are included.

S510: A first device generates a plurality of packet groups.

Specifically, the first device may generate the plurality of packet groups for different transactions. The "transaction" may be understood as a task to be executed by the first device. For example, one or more packet generated for accessing a memory of a second device is referred to as a first packet group, and one or more packet generated for sending data to the second device is referred to as a second packet group. Each packet group includes a plurality of packets. For ease of description, the following uses a first packet in a packet group as an example to describe a format of the packet generated by the first device in this embodiment.

In a possible implementation, if the first packet is a transaction layer packet, the first packet includes a transaction header TA header, the TA header includes a first sequence number SN, first indication information, and second indication information of the first packet, the first indication information indicates a TPG corresponding to the first packet, and the second indication information indicates an ordering requirement of the first packet. The first SN may be an SSN. For example, a transaction layer packet is large, and a plurality of transaction layers share one transport layer. To prevent a packet at a transaction layer from occupying a transport connection for a long time, when sending the packet to the transport layer, the transaction layer may divide the packet into a plurality of segments (for example, a segment of 64 KB), one transaction layer sends only one segment to the transport layer each time, and each segment includes a corresponding SSN.

Specifically, in this implementation, after receiving the first packet, a transport layer of the first device may determine a sending order of the first packet based on the first SN included in the TA header, and determine, based on the first indication information, to transmit the first packet to a transport layer of the second device in the TPG corresponding to the first packet. In this way, load balancing in the TPG can be implemented. In addition, whether the first packet needs to be sent in order is determined based on the second indication information.

A packet that needs to be sent in order (or a packet with an ordering requirement) in this application means that the packet can be sent only when a previous packet of the packet is successfully received by a receiver, and/or when a subsequent packet is not successfully received by the receiver. A packet that does not need to be sent in order (or a packet without an ordering requirement) means that sending of the packet does not need to consider receiving and sending statuses of another packet. A packet that needs to be sent in order and that has a previous packet may be referred to as a previous ordering packet. A packet that needs to be sent in order and that has a subsequent packet may be referred to as a subsequent ordering packet. A packet that needs to be sent in order and that has a previous packet and a subsequent packet may be referred to as a previous and subsequent ordering packet.

In addition, it should be noted that the packet that needs to be sent in order in this application may alternatively be a packet with another ordering requirement, for example, may be a packet that can be sent only when at least one other packet is not (or is) successfully received by the receiver, in other words, a sending status of another packet needs to be considered for sending of the packet that needs to be sent in order in this embodiment. Specifically, forms of the packet that needs to be sent in order are not illustrated herein one by one. For ease of description, the following uses an example in which the packet that needs to be sent in order is a previous ordering packet for description.

In another possible implementation, if the first packet is a transport layer packet, the first packet includes a transaction header TA header and a transport header TP header. In addition, the TA header includes a first SN, first indication information, and second indication information of the first packet, the first indication information indicates a TPG corresponding to the first packet, the second indication information indicates an ordering requirement of the first packet, and the TP header includes a second SN of the first packet.

In this implementation, packet ordered sending may be ordered transmission of a packet from a transport layer.

For ease of description, the following uses an example in which the first packet is a transaction layer packet for description.

The packet transmission method provided in this application is applied to a scenario in which the first device and the second device perform packet transmission, and the first device generates the plurality of packet groups. In this embodiment, the first device is a device that sends the packet, and the second device is a device that receives the packet. For example, the first device may be the initiator node shown in FIG. 2, and the second device may be the target node shown in FIG. 2.

Specifically, that a queue pair (Queue Pair, QP) connection is established between the first device and the second device may be understood as that a one-to-one QP connection is established between the first device and the second device. The QP connection is used to perform packet transmission through a plurality of paths (or links). For example, the QP connection between the first device and the second device shown in FIG. 2 may be used to perform packet transmission by using at least one TPG. Each of the at least one TPG includes a plurality of TP connections, and load balancing is performed on the packets between at least one TP connection in the TPG. Packets on different TP connections may be transmitted through different network paths. Congestion control is implemented at a granularity of TP connection. When a packet loss occurs, retransmission is performed to ensure reliable transmission.

It should be understood that, in this embodiment of this application, how to establish the QP connection between the first device and the second device and how to perform packet transmission through the plurality of paths are not described. Refer to descriptions of multi-path packet transmission in a current related technology. This embodiment of this application mainly relates to how to implement packet ordering when congestion is avoided in a packet multi-path transmission scenario.

Further, after generating the packets, the first device may transmit, based on an ordering requirement through a plurality of paths, the packets included in the plurality of packet groups. In this case, the method procedure shown in FIG. 5 further includes the following step.

S520: The first device sends the packets to the second device.

Specifically, the first device transmits, based on the ordering requirement through the plurality of paths, the packets included in the plurality of packet groups.

In this embodiment, after receiving the packet, the second device may process the packet based on the ordering requirement of the packet. In this case, the method procedure shown in FIG. 5 further includes the following step.

S530: The second device processes the plurality of packets.

A manner in which the second device processes the packet is described below with reference to a specific embodiment. Details are not described in this embodiment.

In this embodiment, to implement the ordering requirement of the packet, a transmitter may implement packet ordered sending, or the receiver may implement packet ordering reception. For ease of understanding, with reference to a specific embodiment, the following describes an ordering procedure of the transmitter (which may also be referred to as a source ordering mode), or an ordering procedure of the receiver (which may also be referred to as a destination ordering mode).

FIG. 6 shows a packet sending method according to an embodiment of this application. According to the packet sending method, a transmit device can send an ordering packet without blocking an out-of-order packet.

Specifically, the transmit device (namely, a first device) stores a first mapping table and a send queue. The first mapping table indicates a packet that has been received by a receive device (namely, a second device). For example, the first mapping table stores an identifier of the packet that has been received by the second device. The send queue includes a to-be-sent packet. The method can be applied to the multi-link packet transmission scenario shown in FIG. 2. The method includes the following steps.

S610: The first device obtains a first packet.

Specifically, the first device obtains the first packet from the send queue, where the first packet includes a first SN and second indication information.

The first SN of the first packet indicates a sending order of the first packet.

Optionally, the first packet may be a transaction layer packet, and the first SN is a segment sequence number (Segment Sequence Number, SSN). For example, the first device may number a sent transaction layer packet (or referred to as a WQE) by using an SSN, and an SSN number increases each time a packet is sent.

Optionally, the first packet may be a transport layer packet. The first device may split a large transaction WQE into TP WQEs numbered by using TPMSNs, and transmit the TP WQEs to a TP. The TP layer receives the TP WQEs obtained through splitting at a TA. For each TP WEQ that is processed, all the TP WQEs at the TP layer are sent to different TPGs for transmission, and sent to a TP connection after balancing processing is performed in the TPG. For a TP connection, data corresponding to the TP WQE is split into packets for transmission.

The second indication information indicates that the first packet is a packet that needs to be sent in order, and the first packet may be referred to as an ordering packet.

It should be understood that the ordering packet in this embodiment is a packet that needs to be sent in order. For example, the first packet is a packet whose sending sequence number is 3, and the first packet needs to be sent in order. In this case, the first packet can be sent only after previous packets (namely, packets whose sending sequence numbers are 1 and 2) are successfully received by the receive device.

In this embodiment, the first device serves as the transmit device. To implement ordered sending of a sent packet in a multi-link scenario, the first device constructs a related ordering data structure in the following manner:

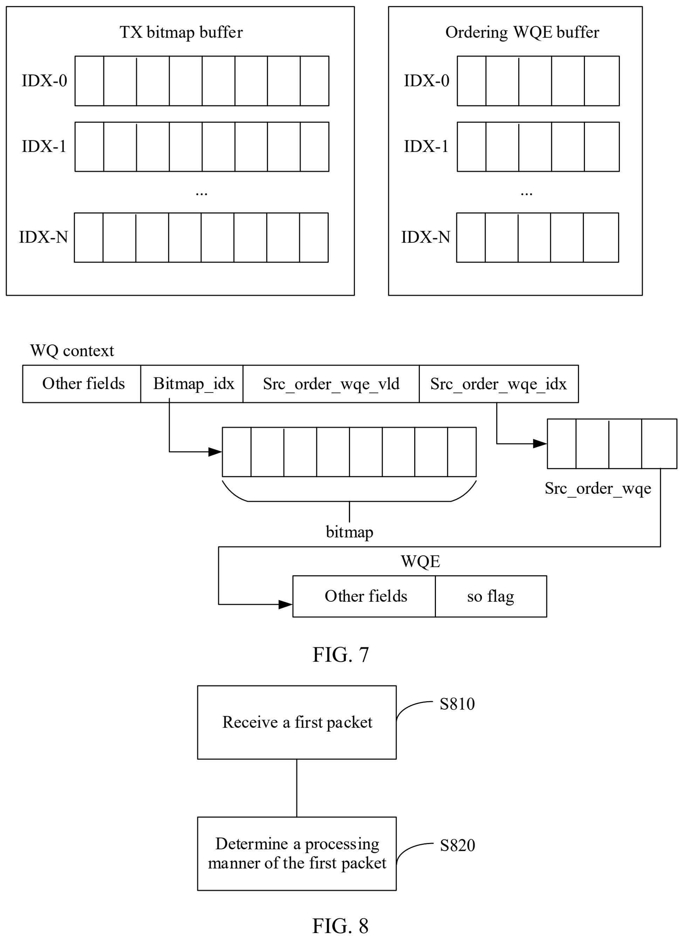

FIG. 7 is a diagram of a data structure constructed by a transmitter according to an embodiment of this application. As shown in FIG. 7, a context of the send queue (which may be referred to as a work queue context WQC) stored in the transmit device includes a first index, a first validation flag, and a first queue index.

The first index (for example, a bitmap_idx #1 field shown in FIG. 7) indicates the first mapping table. For example, the first index points to a bitmap entity in a shared buffer (Buffer) (for example, a TX bitmap buffer shown in FIG. 7, including a total of N bitmap entities numbered from IDX-0 to IDX-N). Optionally, the first index may be understood as an index of an ordering bitmap used by the transmit device.

The first validation flag (for example, an scr_order_wqe_vld field shown in FIG. 7) indicates whether there is a to-be-sent ordering packet in the send queue. For example, the first validation flag indicates whether there is the to-be-sent ordering packet (which may be referred to as a WQE) in the send queue, and each WQE includes a corresponding ordering flag (for example, a so_flag field shown in FIG. 7) and other fields (for example, other fields in a WQE shown in FIG. 7). Optionally, the first validation flag may be understood as an ordering WQE validation flag.

The first queue index (for example, an scr_order_wqe_idx field shown in FIG. 7) is used to buffer an ordering packet that is not sent in time. For example, the first queue index indicates a WQE queue in a shared buffer (for example, an ordering WQE buffer shown in FIG. 7, including a total of N WQE queues numbered from IDX-0 to IDX-N). Optionally, the first queue index may be understood as an ordering WQE queue index.

For example, the context of the send queue may further include other fields (for example, other fields in the WQC shown in FIG. 7).

For ease of understanding, the following describes in detail meanings represented by different fields in FIG. 7 with reference to Table 2.

**Table 2**

| Name (Field Name) | Description (Description) |
|---|---|
| bitmap_idx | One send queue occupies one bitmap, and the bitmap is used to record a location of an out-of-order ACK. The bitmap is shared by all WQs. Therefore, bitmap_idx herein is an identifier (or number) of a bitmap applied for from a shared pool. In this bitmap, a WQE smaller than a segment occupies only 1 bit. For a WQE divided into a plurality of segments, each segment has an ACK, and occupies 1 bit. |
| src_order_wqe_vld | A skipped WQE is recorded in a context of the send queue. This bit is set to 1 upon ordering at a transmitter. Upon ordering at the transmitter, if the WQE in the send queue carries an ordering flag, the ordering WQE can be scheduled only after TAACKs for all WQEs before the ordering WQE are received. |
| src_order_wqe_idx | Identifier (for example, index (index)) of a source ordering mode WQE that waits to be scheduled. |
| so_flag | Packet ordering attribute identifier |

In a possible implementation, the so_flag field in Table 2 includes 2 bits. For example, "00" indicates that a current packet and another packet do not have any ordering requirement; "01" indicates that the current packet is a packet that has an ordering requirement with a subsequent strong ordering packet, where the strong ordering packet cannot be sent before the current packet, and it can be understood that the current packet has a subsequent packet; "10" indicates that the current packet is a strong ordering packet; and "00" are reserved bits.

In another possible implementation, the so_flag field in Table 2 includes 1 bit. For example, "0" indicates that a current packet and another packet have no ordering requirement; and "1" indicates that the current packet has an ordering requirement.

As described above, in this embodiment, the context of the send queue constructed by the transmit device includes the first index indicating the first mapping table and the first queue index of a first queue used to buffer the ordering packet that is not sent in time. Therefore, when creating the send queue, the transmit device may apply for, based on a queue number of the send queue, a bitmap entity to store the identifier of the packet that has been successfully received by the receive device, and may further apply for, based on the queue number of the send queue, a WQE queue to store the ordering packet that is not sent in time.

It should be understood that, in this embodiment, how the transmit device obtains the first mapping table and the WQE queue is not limited. The first mapping table and the WQE queue may be obtained from a buffer through random application based on the queue number, or the first mapping table and the WQE queue that correspond to the queue number may be obtained from a buffer based on the queue number of JFS.

In addition, as described above, the first validation flag included in the context of the send queue indicates whether there is a to-be-sent ordering WQE in the send queue, and each WQE includes a corresponding ordering flag. Therefore, when creating a WQE, before a WQE that requires ordering is written into the send queue, the transmit device sets so_flag in the WQE by using software. In this way, during hardware logic processing, when the ordering WQE is scheduled, it may be determined, based on the so_flag in the WQE, that the ordering WQE needs to be sent in order.

Further, in this embodiment, after obtaining the first packet, the first device determines whether the first packet can be immediately sent. In this case, the method procedure shown in FIG. 6 further includes the following step.

S620: The first device determines whether to send the first packet.

It can be learned from the foregoing that the first packet may be a previous ordering packet. Therefore, the first packet needs to be sent on a premise that a previous packet of the first packet has been successfully received by the receive device.

In a possible implementation, the first packet is a 1^{st} packet sent by the first device, in other words, there is no previous packet of the first packet. For example, the first SN of the first packet is 1. In this implementation, the first device determines that the first packet can be directly sent.

In another possible implementation, all previous packets of the first packet have been successfully received by the receive device. For example, the first SN of the first packet is 3, packets whose SNs are 1 and 2 have been successfully received by the receive device, and the first mapping table includes identifiers of the packets whose SNs are 1 and 2. In this implementation, the first device determines that the first packet can be directly sent.

For ease of understanding, how the first device determines that the first packet can be directly sent in this implementation is described with reference to a specific example.

Example 1: The send queue of the first device sequentially includes packets A, B, C, and D. The packet C is a packet that needs to be sent in order, and includes an ordering identifier (for example, the second indication information included in the first packet in the foregoing description). The packets A and B are previous packets of the packet C. After obtaining the packet C from the send queue, the first device determines that the packet C needs to be sent in order, and TAACKs corresponding to the packets A and B are stored in the first mapping table. In this case, the first device determines that the packet C can be directly sent.

In still another possible implementation, at least one previous packet of the first packet is not successfully received by the receive device. For example, the first SN of the first packet is 3, a packet whose SN is 1 and/or a packet whose SN is 2 are/is not successfully received by the receive device, and the first mapping table includes an identifier of the packet whose SN is 1 and/or an identifier of the packet whose SN is 2. In this implementation, the first device determines not to send the first packet, buffers the first packet into the WQE queue, and sends the first packet after a sending condition is met. In addition, in this implementation, after buffering the first packet, the first device may send a packet that does not need to be sent in order after the first packet.

For ease of understanding, how the first device determines to buffer the first packet in this implementation is described with reference to a specific example.

Example 2: The send queue of the first device sequentially includes packets A, B, C, and D. The packet C is a packet that needs to be sent in order, and includes an ordering identifier (for example, the second indication information included in the first packet in the foregoing description). The packets A and B are previous packets of the packet C. After obtaining the packet C from the send queue, the first device determines that the packet C needs to be sent in order, and the first mapping table does not store a TAACK corresponding to the packet A and/or a TAACK corresponding to the packet B. In this case, the first device determines that the packet C needs to be buffered into the WQE queue, and the packet is sent after a sending condition is met (in other words, the TAACKs corresponding to the packets A and B are both received). In addition, the first device sends the packet D that does not need to be sent in order, so that the packet C does not block sending of the packet D.

The foregoing several implementations describe in detail a manner in which the first device processes the ordering packet. To be specific, in this embodiment, the first device determines whether the ordering WQE can be scheduled, and if the ordering WQE cannot be scheduled, the first device sends a subsequent non-ordering WQE packet, synchronously stores the ordering packet in the ordering WQE queue (for example, src_order_wqe shown in FIG. 6), and updates the first validation flag (for example, the src_order_wqe_vld flag shown in FIG. 7) to indicate that there is a to-be-sent ordering packet in the WQE queue.

Further, the first device may update and maintain a bitmap status in a WQEC based on an ACK returned by the second device, and the first device determines, based on the maintained bitmap status and an ordering validation flag, whether the ordering packet in the WQE queue meets scheduling.

For example, after buffering the first packet to the WQE queue, the first device receives an ACK from the second device, where the ACK indicates that the second device successfully receives a second packet, and the second packet is a previous packet of the first packet. In addition, if the second device successfully receives the second packet, it indicates that all the previous packets of the first packet are successfully received. In this case, after receiving the ACK, the first device updates the first mapping table, stores an identifier of the second packet in the first mapping table, and determines, based on the identifier that is of the packet and that is stored in the first mapping table, that all the previous packets of the first packet are received. Therefore, a sending condition of the first packet is already met, and the first device may send the first packet.

According to the packet sending method shown in FIG. 6, the ordering data structure constructed by the transmit device can be stored in an on-chip static random access memory (Static Random Access Memory, SRAM) or a memory (Memory). When a sending order requirement of a user is met, a subsequent out-of-order packet may not be blocked, and bandwidth of an interconnection network can be fully utilized. The ordering method may also be applied to ordering at a TP layer of the transmit device.

This application further provides a packet receiving method. A transmit device can receive an ordering packet according to the packet receiving method. The following describes in detail the packet receiving method with reference to FIG. 8.

FIG. 8 shows a packet sending method according to an embodiment of this application. The method is applied to a second device. Specifically, a transmit device (namely, the second device) stores a second mapping table, and the second mapping table indicates a packet that has been received by a receive device (namely, the second device). The method can be applied to the multi-link packet transmission scenario shown in FIG. 2, and include the following steps.

S810: The second device receives a first packet.

Specifically, the second device receives the first packet from a first device. The first packet includes a first SN and second indication information. For descriptions of the first SN and the second indication information, refer to the descriptions of the first SN of the first packet and the second indication information in the embodiment shown in FIG. 6. Details are not described herein again.

In this embodiment, the second device serves as a receive device. To implement ordering for a received packet in a multi-link scenario, the second device constructs a related ordering data structure in the following manner:

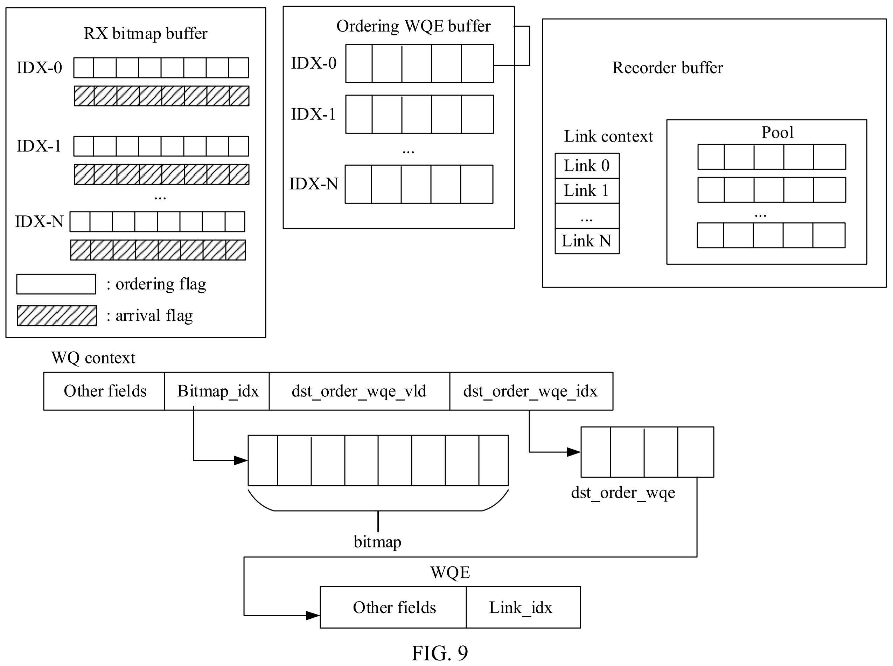

FIG. 9 is a diagram of a data structure constructed by a receiver according to an embodiment of this application. As shown in FIG. 9, a context of a receive queue (which may be referred to as a work queue context WQC) stored in the receive device includes a second index, a second validation flag, and a second queue index.

The second index (for example, a bitmap_idx#2 field shown in FIG. 9) indicates the second mapping table. For example, the second index points to a bitmap entity in a shared buffer (Buffer) (for example, an RX bitmap buffer shown in FIG. 9, including a total of N bitmap entities numbered from IDX-0 to IDX-N). One bitmap entity includes two parts: ordering flag and arrival flag. Optionally, the second index may be understood as an index of an ordering bitmap used by the receive device.

The second validation flag (for example, a dst_order_wqe_vld field shown in FIG. 9) indicates whether there is a received ordering WQE in the receive queue. Each WQE includes a temporarily stored management linked list index for receiving data. For example, the second validation flag indicates whether there is a received ordering packet (which may be referred to as an ordering WQE) in the receive queue. Each ordering WQE includes a corresponding linked list flag (for example, a link_idx field shown in FIG. 9) and other fields (for example, other fields in a WQE shown in FIG. 9). Optionally, the second validation flag may be understood as an ordering WQE validation flag.

The second queue index (for example, a dst_order_wqe_idx field shown in FIG. 9) is used to buffer an ordering packet that is not processed in time. For example, the second queue index indicates a WQE queue in a shared buffer (for example, an ordering WQE buffer shown in FIG. 9, including a total of N WQE queues numbered from IDX-0 to IDX-N). Optionally, the second queue index may be understood as an ordering WQE queue index.

For example, the context of the receive queue may further include other fields (for example, other fields in the WQC shown in FIG. 9).

Specifically, after receiving the first packet, the second device parses a packet header of the first packet to obtain information about the first packet, including but not limited to obtaining the following information: a PSN, a TPMSN, an SN, the second indication information (for example, ordering so_flag), and information about a receive queue number of the first packet.

Further, the second device obtains information about the context of the receive queue based on information about the packet header of the first packet, for example, obtains the information about the context of the receive queue based on the receive queue number. In addition, the first device determines a processing manner of the first packet based on the information about the context of the receive queue. The method procedure shown in FIG. 8 further includes the following step.

S820: The second device determines the processing manner of the first packet.

In a possible implementation, if the first packet is a packet that does not carry an ordering flag, the second device may perform out-of-order processing on the first packet. For example, packet data processing is performed based on ordering information in the information about the context of the receive queue and the information obtained through parsing. For example, corresponding packet data is written into a memory based on a memory address obtained in a WQEC, information about the second mapping table is synchronously updated, and ordering packet writing determining is triggered based on updated information about the second mapping table.

In another possible implementation, if the first packet is a packet that carries an ordering flag, for example, carries the second indication information, the second device may perform ordering processing on the first packet. For example, packet data processing is performed based on ordering information in a WQEC and the PSN, the TPMSN, the SN, and the ordering so_flag that are obtained through parsing, information about the second mapping table is synchronously updated, content of the first packet is written into a temporary buffer space, a corresponding linked list status is updated, and ordering packet writing determining is triggered.

Specifically, ordering packet writing determining includes: reading ordering packet data in an ordering buffer and writing the ordering packet data into the memory based on a current status of the second mapping table when a condition that a previous packet has arrived is met, and updating the corresponding buffer linked list status and a corresponding status of the second mapping table.

In the packet receiving method shown in FIG. 8, when the transmit device performs ordering or transmits one flow over one TP and through one network path, a reordering buffer is not necessarily required, and a related data structure is stored in an on-chip SRAM or a memory. According to the method, when it is ensured that a user fulfills an execution ordering requirement, bandwidth of an interconnection network can also be fully utilized. A receiver ordering method may be applied to a TP layer and a TA layer, and bitmap status maintenance is separately performed based on a TPMSN and an SN.

It should be understood that the specific examples shown in FIG. 5 to FIG. 9 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on the implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. For example, a management mechanism of a current page table is to combine an address and a permission for management, and store the address and the permission in a same page table. However, in some application scenarios, a host may open a same address space to a plurality of users, but permissions of the users are not exactly the same. In the mechanism of the current page table, the page table can only be copied for a plurality of times to meet a requirement of this scenario. With consideration from another perspective, if address translation and permission verification are managed separately, the plurality of users share one address table but exclusively occupy one permission table. This can better adapt to this scenario. In the background in which the permission and the address are separately designed, this application can play a great role in a permission table design. Permission management is more centralized than address management, and therefore a representation form of a range table is more suitable for permission management of a large segment of VA space.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

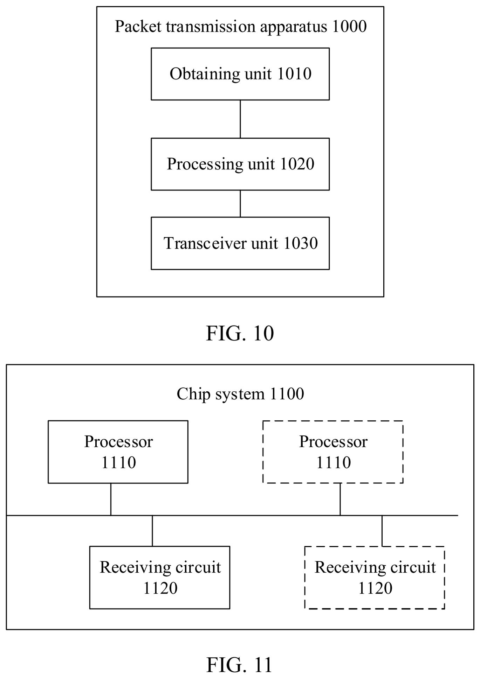

The following describes in detail a packet transmission apparatus provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmit device or a receive device may be divided based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

FIG. 10 is a diagram of a structure of a packet transmission apparatus 1000 according to an embodiment of this application.

In an example, the packet transmission apparatus 1000 may be used in a first device, and the packet transmission apparatus 1000 may be configured to perform the foregoing packet transmission method, for example, configured to perform the method shown in FIG. 5 or FIG. 6. The packet transmission apparatus 1000 stores a first mapping table and a send queue. The first mapping table includes an identifier of a packet that has been received by a second device, and the send queue includes a to-be-sent packet. Specifically, the packet transmission apparatus 1000 may include an obtaining unit 1010, a processing unit 1020, and a transceiver unit 1030.

The obtaining unit 1010 is configured to obtain a first packet from the send queue, where the first packet is an ordering packet. The processing unit 1020 is configured to determine whether to send the first packet. When an identifier of at least one previous packet of the first packet is in the first mapping table, the transceiver unit 1030 is configured to send the first packet; or when an identifier of at least one previous packet of the first packet is not in the first mapping table, the obtaining unit 1010 is configured to obtain a non-ordering packet after the first packet, and the transceiver unit 1030 is configured to send the non-ordering packet after the first packet.

For example, with reference to FIG. 5, the processing unit 1020 may be configured to perform S510, and the transceiver unit 1030 may be configured to perform S520.

For example, with reference to FIG. 6, the obtaining unit 1010 may be configured to perform S610, and the processing unit 1020 may be configured to perform S620.

It should be noted that the apparatus in FIG. 10 may also be configured to perform method steps in variations of embodiments shown in the foregoing accompanying drawings. Details are not described herein again.

In another example, the packet transmission apparatus 1000 may be used in a second device, and the packet transmission apparatus 1000 may be configured to perform the foregoing packet transmission method, for example, configured to perform the method shown in FIG. 5 or FIG. 8. The packet transmission apparatus 1000 stores a second mapping table, and the second mapping table includes an identifier of a packet that has been received by the second device.

A transceiver unit 1030 is configured to: receive a first packet from a first device, store an identifier of the first packet in the second mapping table, and update the second mapping table, where the first packet is an ordering packet. When an identifier of at least one previous packet of the first packet is in the second mapping table, a processing unit 1020 is configured to process the first packet and the previous packet of the first packet; or when an identifier of at least one packet before a second packet is not in the second mapping table, the processing unit 1020 is configured to buffer the first packet, and the transceiver unit 1030 is configured to receive a non-ordering packet after the first packet.

For example, with reference to FIG. 5, the processing unit 1020 may be configured to perform S530, and the transceiver unit 1030 may be configured to perform S520.

For example, with reference to FIG. 8, the transceiver unit 1030 may be configured to perform S810, and the processing unit 1020 may be configured to perform S820.

It should be noted that the apparatus in FIG. 10 may also be configured to perform method steps in variations of embodiments shown in the foregoing accompanying drawings. Details are not described herein again.

An embodiment of this application further provides a chip system 1100. As shown in FIG. 11, the chip system 1100 includes at least one processor and at least one interface circuit. For example, when the chip system 1100 includes one processor and one interface circuit, the processor may be a processor 1110 shown in a solid line box (or a processor 1110 shown in a dashed line box) in FIG. 11, and the interface circuit may be an interface circuit 1120 shown in a solid line box (or an interface circuit 1120 shown in a dashed line box) in FIG. 11.

When the chip system 1100 includes two processors and two interface circuits, the two processors include a processor 1110 shown in a solid line box and a processor 1110 shown in a dashed line box in FIG. 11, and the two interface circuits include an interface circuit 1120 shown in a solid line box and an interface circuit 1120 shown in a dashed line box in FIG. 11. This is not limited. The processor 1110 and the interface circuit 1120 may be interconnected through a line. For example, the interface circuit 1120 may be configured to receive a signal (for example, instructions stored in a memory). For another example, the interface circuit 1120 may be configured to send a signal to another apparatus (for example, the processor 1110).

For example, the interface circuit 1120 may read the instructions stored in the memory, and send the instructions to the processor 1110. When the instructions are executed by the processor 1110, a packet transmission apparatus may be caused to perform the steps in the foregoing embodiment. Certainly, the chip system 1100 may further include another discrete component. This is not specifically limited in embodiments of this application.

Another embodiment of this application further provides a computer-readable storage medium. The computer-readable storage medium stores instructions. When the instruction are run on a packet transmission apparatus, the packet transmission apparatus performs the steps performed by the packet transmission apparatus in the method procedure shown in the foregoing method embodiment. In some embodiments, the disclosed methods may be implemented as computer program instructions encoded in a machine-readable format on a computer-readable storage medium or encoded on another non-transitory medium or product.

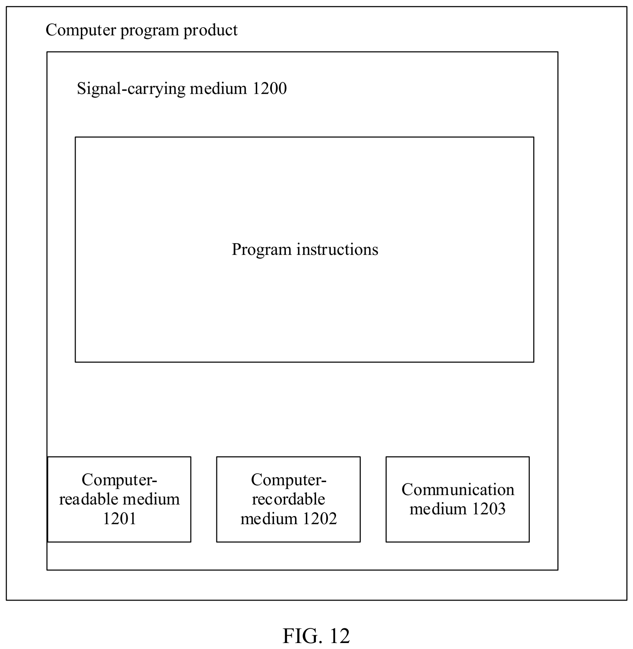

FIG. 12 schematically shows a conceptual partial view of a computer program product according to an embodiment of this application. The computer program product includes a computer program for executing a computer process on a computer device.

In an embodiment, the computer program product is provided via a signal-carrying medium 1200. The signal-carrying medium 1200 may include one or more program instructions. When the program instructions are run by one or more processors, functions or some functions described for FIG. 5, FIG. 6, and FIG. 8 may be provided. Therefore, for example, one or more features of S510 to S530 in FIG. 5 may be borne by one or more instructions associated with the signal-carrying medium 1200. In addition, the program instructions in FIG. 12 are also described as example instructions.

In some examples, the signal-carrying medium 1200 may include a computer-readable medium 1201, for example but not limited to, a hard disk drive, a compact disk (CD), a digital video disc (DVD), a digital tape, a memory, a read-only memory (read-only memory, ROM), or a random access memory (random access memory, RAM).

In some implementations, the signal-carrying medium 1200 may include a computer-recordable medium 1202, for example but not limited to, a memory, a read/write (R/W) CD, or an R/W DVD.

In some implementations, the signal-carrying medium 1200 may include a communication medium 1203, for example but not limited to, a digital and/or analog communication medium (for example, an optical fiber, a waveguide, a wired communication link, or a wireless communication link). The signal-carrying medium 1200 may be conveyed by a communication medium 1203 in a wireless form (for example, a wireless communication medium that complies with the IEEE 1502.11 standard or another transmission protocol). The one or more program instructions may be, for example, computer-executable instructions or logic implementation instructions.

In some examples, for example, a packet transmission apparatus described for FIG. 5 may be configured to provide various operations, functions, or actions in response to one or more program instructions in the computer-readable medium 1201, the computer-recordable medium 1202, and/or the communication medium 1203.

It should be understood that the arrangement described herein is merely used as an example. Therefore, a person skilled in the art will understand that other arrangements and other elements (for example, machines, interfaces, functions, sequences, and function groups) can be used instead, and some elements may be omitted together based on a desired result. In addition, many of the described elements are functional entities that can be implemented as discrete or distributed components, or implemented in any appropriate combination at any appropriate location in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, the procedures or functions according to embodiments of this application are all or partially generated. The computer may be a general-purpose computer, a special-purpose computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet transmission method, applied to a first device, wherein the first device establishes a queue pair QP connection to a second device, the QP connection is used to perform packet transmission by using at least one transport group TPG, the first device stores a first mapping table and a send queue, the first mapping table comprises an identifier of a packet that has been received by the second device, and the send queue comprises a to-be-sent packet; and the method comprises:
obtaining, by the first device, a first packet from the send queue, wherein the first packet is an ordering packet; and
when an identifier of at least one previous packet of the first packet is not in the first mapping table, obtaining, by the first device, a non-ordering packet after the first packet, and sending the non-ordering packet.

2. The method according to claim 1, wherein when all identifiers of previous packets of the first packet are in the first mapping table, the first device sends the first packet.

3. The method according to claim 1 or 2, wherein the first packet is a transaction layer packet, and the first packet comprises a transaction header TA header; and
the TA header comprises a first sequence number SN, first indication information, and second indication information of the first packet, wherein the first indication information indicates a TPG corresponding to the first packet, and the second indication information indicates an ordering requirement of the first packet.

4. The method according to claim 3, wherein that the first device sends the first packet comprises:
sending, by a transaction layer of the first device, the first packet to a transport layer of the first device; and
sending, by the transport layer of the first device, the first packet to a transport layer of the second device.

5. The method according to claim 3 or 4, wherein after sending, by the first device, the first packet, the method further comprises:
storing, by the first device, the first SN in the first mapping table.

6. The method according to claim 1, wherein when an identifier of at least one previous packet of the first packet is not in the first mapping table, the method further comprises:
buffering, by the first device, the first packet in a buffer of the first device.

7. The method according to claim 6, wherein the method further comprises:
receiving, by the first device, acknowledgment information from the second device, wherein the acknowledgment information indicates that a second packet has been received by the second device;
storing, by the first device, an identifier of the second packet in the first mapping table, and updating the first mapping table; and
determining, by the first device based on an updated first mapping table, whether to send the first packet.

8. The method according to any one of claims 1 to 7, wherein obtaining, by the first device, the non-ordering packet after the first packet, and sending the non-ordering packet comprises:
obtaining, by the first device from the send queue, a third packet after the first packet;
determining, by the first device based on an ordering requirement carried in a transaction header TA header of the third packet, that the third packet is a non-ordering packet; and
sending, by the first device, the third packet.

9. The method according to any one of claims 1 to 8, wherein a context of the send queue comprises the following information:
a first index, a first validation flag, and a first queue index, wherein the first index indicates the first mapping table, the first validation flag indicates whether there is a to-be-sent ordering packet in the send queue, the first queue index indicates a first queue, and the first queue is used to buffer an unsent ordering packet.

10. The method according to any one of claims 1 to 9, wherein the method further comprises:
setting, by the first device, the second indication information when creating an operation unit WQE comprising the send queue of the first packet.

11. A packet transmission apparatus, wherein the apparatus establishes a queue pair QP connection to a second device, the QP connection is used to perform packet transmission by using at least one transport group TPG, the apparatus stores a first mapping table and a send queue, the first mapping table comprises an identifier of a packet that has been received by the second device, and the send queue comprises a to-be-sent packet; and the apparatus comprises:
a processing module, configured to obtain a first packet from the send queue, wherein the first packet is an ordering packet; and
when an identifier of at least one previous packet of the first packet is not in the first mapping table, the processing module is further configured to obtain a non-ordering packet after the first packet, and the sending module is further configured to send the non-ordering packet.

12. The apparatus according to claim 11, wherein when all identifiers of previous packets of the first packet are in the first mapping table, the sending module is configured to send the first packet.

13. The apparatus according to claim 11 or 12, wherein the first packet is a transaction layer packet, and the first packet comprises a transaction header TA header; and
the TA header comprises a first sequence number SN, first indication information, and second indication information, wherein the first indication information indicates a TPG corresponding to the first packet, and the second indication information indicates an ordering requirement of the first packet.

14. The apparatus according to claim 13, wherein the apparatus comprises a transaction layer and a transport layer, the sending module comprises a sending module at the transaction layer and a sending module at the transport layer, and that the sending module sends the first packet comprises:
sending, by the sending module at the transaction layer, the first packet to the transport layer; and
sending, by the sending module at the transport layer, the first packet to a transport layer of the second device.

15. The apparatus according to claim 14, wherein after the sending module sends the first packet, the processing module is further configured to store the first SN in the first mapping table.

16. The apparatus according to claim 11, wherein when an identifier of at least one previous packet of the first packet is not in the first mapping table, the processing module is further configured to buffer the first packet in a buffer of the first device.

17. The apparatus according to claim 16, wherein the apparatus further comprises:
a receiving module, configured to receive acknowledgment information from the second device, wherein the acknowledgment information indicates that a second packet has been received by the second device;
the processing module is further configured to: store an identifier of the second packet in the first mapping table, and update the first mapping table; and
the processing module is further configured to determine, based on an updated first mapping table, whether to send the first packet.

18. The apparatus according to any one of claims 11 to 17, wherein the sending module obtains, from the send queue, a third packet after the first packet; and
the processing module determines, based on an ordering requirement carried in a transaction header TA header of the third packet, that the third packet is a non-ordering packet; and
the sending module sends the third packet.

19. The apparatus according to any one of claims 11 to 18, wherein a context of the send queue comprises the following information:
a first index, a first validation flag, and a first queue index, wherein the first index indicates the first mapping table, the first validation flag indicates whether there is a to-be-sent ordering packet in the send queue, the first queue index indicates a first queue, and the first queue is used to buffer an unsent ordering packet.

20. The apparatus according to any one of claims 11 to 19, wherein the processing module is further configured to set the second indication information when creating an operation unit WQE comprising the send queue of the first packet.

21. A packet transmission apparatus, comprising a processor, configured to read instructions stored in a memory, wherein when the processor executes the instructions, the packet transmission apparatus is caused to implement the method according to any one of claims 1 to 10.

22. A packet transmission apparatus, comprising a unit configured to perform the method according to any one of claims 1 to 10.

23. A chip, comprising:
at least one processing core, configured to perform the method according to any one of claims 1 to 10.

24. A computer device, comprising the chip according to claim 23.

25. A computer program product, wherein the computer program product comprises computer program code, and when the computer program code is run on a computer, the method according to any one of claims 1 to 10 is performed.

26. A computer-readable storage medium, comprising a computer program, wherein when the computer program is run on a computer device, a processing module in the computer device is caused to perform the method according to any one of claims 1 to 10.

27. A packet transmission system, comprising a first device configured to perform the method according to any one of claims 1 to 10 and a second device that establishes a queue pair QP connection to the first device.
